# EUROPEAN PATENT SPECIFICATION

(11) **EP 1 645 798 B1**
(45) Date of publication and mention of the grant of the patent: **28.03.2012**
(21) Application number: 04104472.8
(22) Date of filing: 15.09.2004
(51) Int. Cl.: F21V 8/00, G02F 1/13357, G09G 3/36

(54) **A method and device to improve backlight uniformity**
Verfahren und Vorrichtung zur Herstellung einer gleichmässigen Rückbeleuchtung
Procédé et dispositif pour améliorer l'homogénéité d'un rétro-éclairage

(43) Date of publication of application: 12.04.2006
(73) Proprietor: RESEARCH IN MOTION LIMITED, Waterloo, Ontario N2L 3W8 (CA)
(72) Inventor: Robinson, James, Waterloo, Ontario N2L 3W8 (CA); Drader, Marc, Waterloo, Ontario N2L 3W8 (CA); Purdy, Michael, Waterloo, Ontario N2L 3W8 (CA)
(74) Representative: Moore, Barry

(56) References cited:
- EP-A- 0 571 173
- US-A- 5 359 342
- US-A- 5 680 233
- PATENT ABSTRACTS OF JAPAN vol. 2002, no. 05, 3 May 2002 (2002-05-03) -& JP 2002 008423 A (SANYO ELECTRIC CO LTD), 11 January 2002 (2002-01-11)
- PATENT ABSTRACTS OF JAPAN vol. 015, no. 119 (P-1183), 22 March 1991 (1991-03-22) -& JP 03 009306 A (MITSUBISHI PETROCHEM CO LTD; others: 01), 17 January 1991 (1991-01-17)

## Description

The present invention relates to the field of liquid crystal displays and, particularly, to the field of backlighting for liquid crystal displays and/or keypads.

Liquid crystal displays are often illuminated by a backlight. When developing an LCD or keypad lighting system, many challenges are encountered that limit the ability to provide a uniformly lit light source to the display or keypad. For example, constraints on the x, y, and z size of the backlight system require tradeoffs or compromises in achieving proper and sufficient optical performance. Especially in those cases where there is little space in the x or y directions (the planar extensions of the light guide), the light guide providing light to the display from a light source (e.g., light emitting diodes - LEDs) or a light source directly illuminating a display may illuminate areas of the display (or keypad) more strongly than other areas. The more strongly lit areas are often referred to as "hot spots" or "bright spots." Currently, the options to compensate for hot spots in LED illuminated LCDs and keypads are 1) moving the LEDs farther away from the light guide; 2) increasing the number of LEDs; or 3) creating a complex and difficult to tool optical dispersion patterns on the light guide plastic surface. The current methods have shortcomings. If x, y space is critical, then option (1) is not possible. Option (2) may be cost prohibitive. Option (3) in which creating a complex pattern is formed on the light guide, using current techniques, may increase the price of the light guide, extend the development time, and require difficult and/or expensive tooling for manufacture. Thus, there is a need to provide an effective and cost effective method for eliminating hot spots from an illuminated light guide in a space constrained arrangement.

JP03009306 discloses a compensation mechanism for a backlight device which provides a distinct array of graded dots which function to at least partially even out the intensity of light supplied. EP0571173 provides a back lit LCD arrangement comprising a pattern of dots for at least partially evening out the intensity of light supplied. JP2002008423 discloses a back-lit device employing a plurality of variable depth pitches employed in an attempt at evening out the intensity of light emitted from spot sources thereof. US5680233 discloses an image projection system where an image is projected by transmitting a light through an LCD panel. The LCD panel may be provided as part of a laptop. A light guide structure is provided for the display panel assembly. The guide is a planar structure. Light enters the guide through a lateral edge of the structure and light emanates from the sides of the structure towards the LCD panel. The guide may be a polymer dispersed liquid crystal (PDLC) panel. In order to compensate for an unspecified decrease in light intensity, two compensation systems for the PDLC are provided. First, the density of the liquid crystals is made to be progressively more dense towards the center of the PDLC within the PDLC. Second, electrode strips are provided within the PDLC. Varying widths of the strips causes greater light scattering towards the center of the PDLC. US5359342 discloses a compensation system for display non-uniformity for LCD panels. The non-uniformity may be caused by non-uniformity of the backlight. The system splits a screen into sections and adjusts an applied analog video signal in the split region. The analog video signal has offset voltages added to compensate for the additional screen brightness needed.

### GENERAL

Accordingly there is provided a method as detailed in claim 1. A light output arrangement as detailed in claim 5 is also provided. A wireless handheld device as detailed in claim 12 is also provided. Advantageous features are provided in the dependent claims.
In a main aspect of the invention, there is provided a method of compensation for non-uniform illumination from a light guide for a display or keypad for an electronic device, comprising: determining a light intensity distribution pattern having at least one hot spot across the light guide when illuminated; creating a grey scale compensation bitmap for *a first liquid crystal display; and* applying said grey scale compensation bitmap to pixels of the first liquid crystal display to compensate for the hot spot in the light guide (328), such that a uniform light is provided for the display or keypad.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

Embodiments of present invention will now be described by way of example with reference to attached figures, wherein:
FIG. 1 is a block diagram that illustrates pertinent components of a wireless communications device that communicate within a wireless communication network according to the present invention;
FIG. 2 is a more detailed diagram of a preferred wireless communications device of FIG. 1 according to the present invention;
FIG. 3 illustrates an embodiment of a backlit liquid crystal display of the present invention;
FIG. 4 illustrates an embodiment of a transparent sheet with filters to correct for the hot spots of the light guide;
FIG. 5 illustrates an embodiment of an image capture method for capturing an image from which a filter is formed;
FIG. 6 illustrates an embodiment of a method for forming a hot spot filter; and
FIG. 7 illustrates an embodiment of a method for forming a hot spot compensation map for light sources of different colours.

### DETAILED DESCRIPTION

The present invention relates to a method and apparatus, especially a mobile station such as a handheld communications device, that eliminates bright spots (or hot spots) in the light output pattern from a light guide that illuminates a display. Preferably, the light guide is illuminated by a light source that includes one or more light emitting diodes (LEDs). The LEDs of the light source preferably will include red, green, and blue colours. Other colour schemes, such as cyan, magenta, and yellow, are contemplated by the present invention. Although the present invention is directed to a liquid crystal display per se, the preferred use of the LCD is in a mobile station, such as a wireless portable handheld communications device. Cell phones and pagers are amongst the many handheld devices contemplated by the present invention. Aside from illuminating a display, the method may be used to illuminate a keypad or keyboard, such as a keypad found on a mobile station, or other illuminable device or layer.

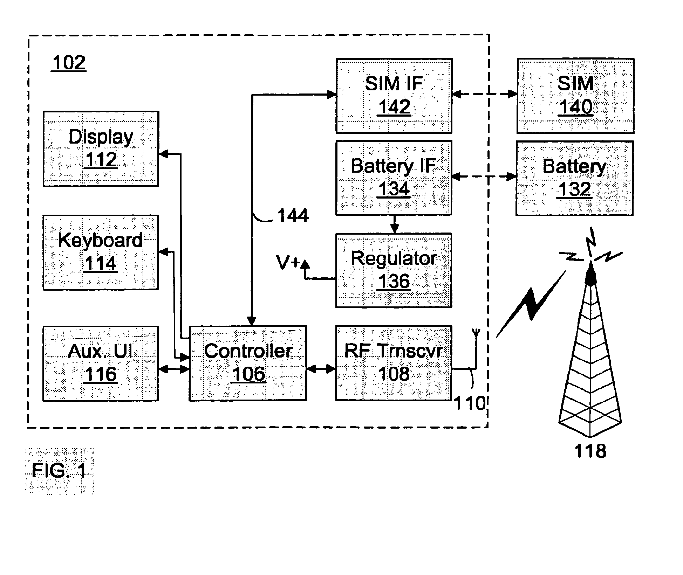

FIG. 1 is a block diagram of a communication system 100 that includes a mobile station 102 that communicates through a wireless communication network. Mobile station 102 preferably includes a visual display 112, a keyboard 114, and perhaps one or more auxiliary user interfaces (UI) 116, each of which is coupled to a controller 106. Controller 106 is also coupled to radio frequency (RF) transceiver circuitry 108 and an antenna 110.

Typically, controller 106 is embodied as a central processing unit (CPU) which runs operating system software in a memory component (not shown). Controller 106 will normally control overall operation of mobile station 102, whereas signal-processing operations associated with communication functions are typically performed in radio frequency (RF) transceiver circuitry 108. Controller 106 interfaces with device display 112 to display received information, stored information, user inputs, and the like. Keyboard 114, which may be a telephone type keypad or full alphanumeric keyboard, is normally provided for entering data for storage in mobile station 102, information for transmission to network, a telephone number to place a telephone call, commands to be executed on mobile station 102, and possibly other or different user inputs.

Mobile station 102 sends communication signals to and receives communication signals from the wireless network over a wireless link via antenna 110. RF transceiver circuitry 108 performs functions similar to those of a base station and a base station controller (BSC) (not shown), including for example modulation/demodulation and possibly encoding/decoding and encryption/decryption. It is also contemplated that RF transceiver circuitry 108 may perform certain functions in addition to those performed by a BSC. It will be apparent to those skilled in art that RF transceiver circuitry 108 will be adapted to particular wireless network or networks in which mobile station 102 is intended to operate.

Mobile station 102 includes a battery interface (IF) 134 for receiving one or more rechargeable batteries 132. Battery 132 provides electrical power to electrical circuitry in mobile station 102, and battery IF 134 provides for a mechanical and electrical connection for battery 132. Battery IF 134 is coupled to a regulator 136 which regulates power to the device. When mobile station 102 is fully operational, an RF transmitter of RF transceiver circuitry 108 is typically keyed or turned on only when it is sending to network, and is otherwise turned off to conserve resources. Similarly, an RF receiver of RF transceiver circuitry 108 is typically periodically turned off to conserve power until it is needed to receive signals or information (if at all) during designated time periods.

Mobile station 102 operates using a Subscriber Identity Module (SIM) 140 which is connected to or inserted in mobile station 102 at a SIM interface (IF) 142. SIM 140 is one type of a conventional "smart card" used to identify an end user (or subscriber) of mobile station 102 and to personalize the device, among other things. Without SIM 140, the mobile station terminal is not fully operational for communication through the wireless network. By inserting SIM 140 into mobile station 102, an end user can have access to any and all of his/her subscribed services. SIM 140 generally includes a processor and memory for storing information. Since SIM 140 is coupled to SIM IF 142, it is coupled to controller 106 through communication lines 144. In order to identify the subscriber, SIM 140 contains some user parameters such as an International Mobile Subscriber Identity (IMSI). An advantage of using SIM 140 is that end users are not necessarily bound by any single physical mobile station. SIM 140 may store additional user information for the mobile station as well, including datebook (or calendar) information and recent call information.

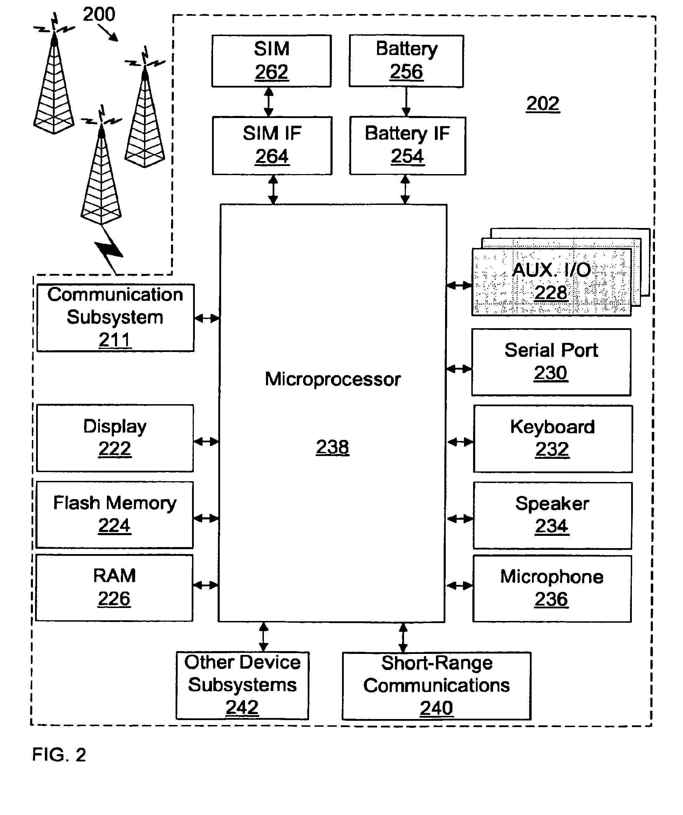

Mobile station 102 may consist of a single unit, such as a data communication device, a multiple-function communication device with data and voice communication capabilities, a personal digital assistant (PDA) enabled for wireless communication, or a computer incorporating an internal modem. Alternatively, mobile station 102 may be a multiple-module unit comprising a plurality of separate components, including but in no way limited to a computer or other device connected to a wireless modem. In particular, for example, in the mobile station block diagram of FIG. 1, RF transceiver circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU. The display may be a liquid crystal display (LCD), such as an LCD with colour filters or a field sequential LCD. It is also contemplated that a computer or other equipment not normally capable of wireless communication may be adapted to connect to and effectively assume control of RF transceiver circuitry 108 and antenna 110 of a single-unit device such as one of those described above. Such a mobile station 102 may have a more particular implementation as described later in relation to mobile station 202 of FIG. 2.

FIG. 2 is a detailed block diagram of a preferred mobile station 202. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities). Mobile station 202 may communicate with any one of a plurality of fixed transceiver stations 200 within its geographic coverage area.

Mobile station 202 will normally incorporate a communication subsystem 211, which includes a receiver, a transmitter, and associated components, such as one or more (preferably embedded or internal) antenna elements and, local oscillators (LOs), and a processing module such as a digital signal processor (DSP) (all not shown). Communication subsystem 211 is analogous to RF transceiver circuitry 108 and antenna 110 shown in FIG. 1. As will be apparent to those skilled in field of communications, particular design of communication subsystem 211 depends on the communication network in which mobile station 202 is intended to operate.

Network access is associated with a subscriber or user of mobile station 202 and therefore mobile station 202 requires a Subscriber Identity Module or "SIM" card 262 to be inserted in a SIM IF 264 in order to operate in the network. SIM 262 includes those features described in relation to FIG. 1. Mobile station 202 is a battery-powered device so it also includes a battery IF 254 for receiving one or more rechargeable batteries 256. Such a battery 256 provides electrical power to most if not all electrical circuitry in mobile station 202, and battery IF 254 provides for a mechanical and electrical connection for it. The battery IF 254 is coupled to a regulator (not shown) which provides power V+ to all of the circuitry.

Mobile station 202 includes a processor 238 (which is one implementation of controller 106 of FIG. 1) which controls overall operation of mobile station 202. Communication functions, including at least data and voice communications, are performed through communication subsystem 211. Processor 238 may be an integrated circuit such as a microprocessor, a processing core on an integrated circuit, a processor of a system on a chip, or the like. Processor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by processor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Processor 238, in addition to its operating system functions, preferably enables execution of software applications on mobile station 202. A predetermined set of applications which control basic device operations, including at least data and voice communication applications, will normally be installed on mobile station 202 during its manufacture. A preferred application that may be loaded onto mobile station 202 may be a personal information manager (PIM) application having the ability to organize and manage data items relating to the user such as, but not limited to, instant messaging (IM), e-mail, calendar events, voice mails, appointments, and task items. Naturally, one or more memory stores are available on mobile station 202 and SIM 262 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network 200, an auxiliary I/O subsystem 228, serial port 230, short-range communications subsystem 240, or any other suitable subsystem 242, and installed by a user in RAM 226 or preferably a non-volatile store (not shown) for execution by processor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

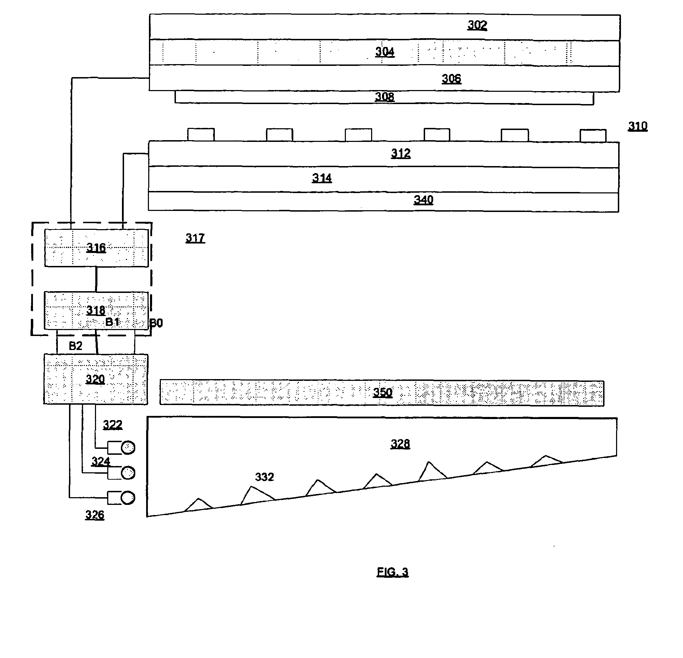

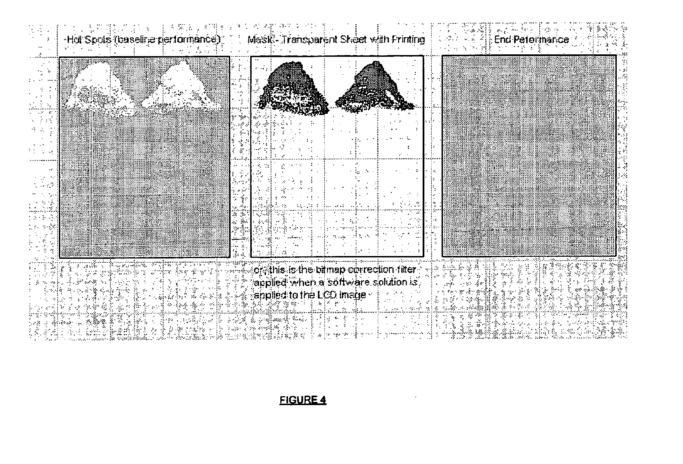

In a data communication mode, a received signal such as a text message, an e-mail message, or web page download will be processed by communication subsystem 211 and input to processor 238. Processor 238 will preferably further process the signal for output to display 222, to auxiliary I/O device 228 or both as described further herein below with reference to Figures 3 and 4. A user of mobile station 202 may also compose data items, such as e-mail messages, for example, using keyboard 232 in conjunction with display 222 and possibly auxiliary I/O device 228. Keyboard 232 is preferably a complete alphanumeric keyboard or keypad and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication.

Short-range communications subsystem 240 of FIG. 2 is an additional optional component which provides for communication between mobile station 202 and different systems or devices, which need not necessarily be similar devices. For example, subsystem 240 may include an infrared device and associated circuits and components, or a Bluetooth™ communication module to provide for communication with similarly-enabled systems and devices. Bluetooth^{™} is a registered trademark of Bluetooth SIG, Inc.

In accordance with an embodiment of the invention, mobile station 202 is a multitasking handheld wireless communications device configured for sending and receiving data items and for making and receiving voice calls. To provide a user-friendly environment to control the operation of mobile station 202, an operating system resident on station 202 (not shown) provides a graphical user interface (GUI) having a main screen and a plurality of sub-screens navigable from the main screen.

A preferred embodiment of the liquid crystal display cell 222 is shown in greater detail in Figure 3 in which a light source formed from multiple LEDs 322, 324, 326 is used as a backlight. The LCD may be a passive matrix or active matrix device. Preferably, the LCD is a full colour device. More preferably, the LCD is a field sequential LCD (FS LCD) - an LCD that obviates a need for colour filters. Alternatively, the LCD may contain colour filters in which case a white light source may be used. LCD controller 316 provides a voltage to the common electrode(s) 308 and the active elements 310 of the active matrix. The active elements are preferably thin film transistors. The common electrode(s) 308 and active elements of the LCD are supported on substrates 306 and 312, respectively. The LCD preferably contains a brightness enhancing film or layer 340 to optimize the distribution of light for a viewer. As the preferred liquid crystal material is super twisted nematic, polarizers 302 and 314 are used. The LCD controller 316 sets the pixel grey scale of the LCD. An optional processor 318 may coordinate synchronization of the LCD controller 316 with the light source controller 320. Preferably, the LCD controller 316 and the processor 318 are integrated into a single device 317, which may simply be referred to as an LCD controller that has the capability of controlling a light source controller 320. The light source may be implemented by using red, green, and blue LEDs 322, 324, 326. In a specific embodiment, four green, four red, and two blue LEDs are used to provide full colour and/or black and white display. Other combinations of LEDs are contemplated by the present invention. The LED controller 320 may sequence the three colours or may simultaneously energize LEDs of all the colours and terminate power to the LEDs simultaneously. The light guide 328 may have a tapered block construction and may have approximately a trapezoidal form to more evenly distribute the light into the LCD. The light guide may also have uneven areas 332 that scatter the light so as to avoid shadowing effects in the LCD image. Although uneven area 332 is shown to project inward to the surface of the light guide 328, the uneven areas may be arranged differently so long as the arrangement effectively scatters the light from the LEDs 322, 324, 326. The uneven areas may be abraded, molded, corrugated, chemically etched, or the like. Preferably, to maximize the utilization of light, the LEDs 322, 324, 326 and the light guide 328 are partially enclosed by a reflector such that the only opening is fully bounded by the light transmissive area of the LCD.

FIG. 4 illustrates a light guide and a compensation sheet. The left image of FIG. 4 shows hot spots as seen from the LCD side of the light guide. The hot spot image may be captured directly from the light guide when the light guide is illuminated from its light source or may be captured through a filter. A mask is formed from the captured image in a pattern that mirrors the pattern of light from an illuminated light guide. The mask, shown in the centre image of FIG. 4, may be a sheet or film with apertures. The hot spot filter may be a transparent sheeting with printing or coating in select areas corresponding to the hot spots. The printing or coating may be light absorptive or partially light reflective. Light absorbing pigments may offer lower cost in making. Partially light reflective (and partially light transmissive) coatings aid to recycle light and so reduce power consumption since less power needs to be expended for illumination. The degree of reflectivity/ transmissivity of a hot spot compensating region on a hot spot filter may be adjusted according to the particular application. Alternative to a transparent sheet with printing or coating, a bitmap correction filterto applied for a software solution to the LCD image such as when a shutter (e.g., another LCD) is used to establish lowered transmissivity regions over the hot spots. The end result of the hot spot compensation layer or shutter is a uniform planar light to the LCD.

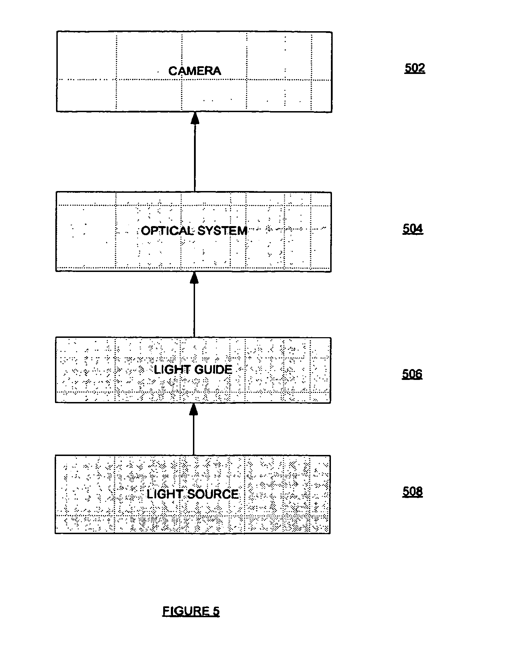

FIG. 5 illustrates an exemplary embodiment of an optical system that captures the light distribution from a light guide 506 when illuminated by a light source 508. The light source may include one or more light emitting diodes. For a full colour liquid crystal display, an image may be captured for each colour of light. Capturing an image for each colour of light allows for a more accurate hot spot filtering pattern to account for physical offsets in location for the light emitting diodes of each colour. For example, because a red LED is not located where a green LED is, the light output pattern from a light guide illuminated by the red LED is not likely to be identical to the light output pattern from the light guide illuminated by the green LED. Furthermore, a light guide image may be obtained from each individual LED of the backlight. This is especially useful where more than one LED is used per colour. The light output pattern from the light guide 506 may be optically processed through an optical system 504 that transfers to appropriately scaled imaged to a receiving sensor array with a camera 502. In an embodiment, the optical system 504 may include one or more lenses. The camera 502 may, for example, include a charge-coupled device (CCD).

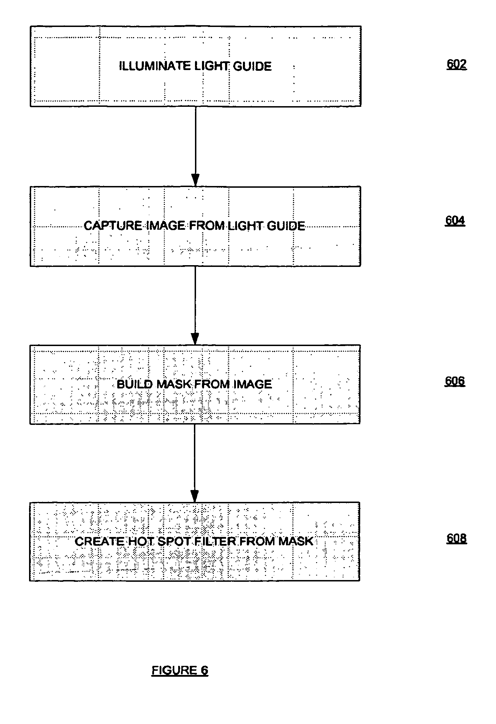

FIG. 6 illustrates an embodiment of a method for creating a hot spot filter for the light guide. The light guide is illuminated to provide a light output pattern by an individual LED (e.g., white, red, green, or blue) or a group of LEDs representing a colour in step 602. The light output pattern may be optically processed. This light output pattern is captured as an image by a light-capturing device, such as a camera 604. The captured image may be used to make a mask 606. This mask, in turn, is used to form the hot spot filter 608. For example, the mask may contain apertures shaped and sized to conform to the hot spots. The mask may be laid over or upon a substrate, such as a plastic or glass film, and a coating or printing process deposits reflective and/or absorptive material onto the substrate through these apertures. After further processing (e.g., heating, drying, ultraviolet or infrared curing), the substrate is ready for disposition over the light guide in the finished product. The image capturing process may be performed from an actual handheld wireless device that is opened to expose the light guide. In such case, the camera may be disposed at a distance corresponding to that of the LCD's location within the finished product. This image capturing process may be performed once per batch or at a designated sampling rate to account for component devices from batch to batch.

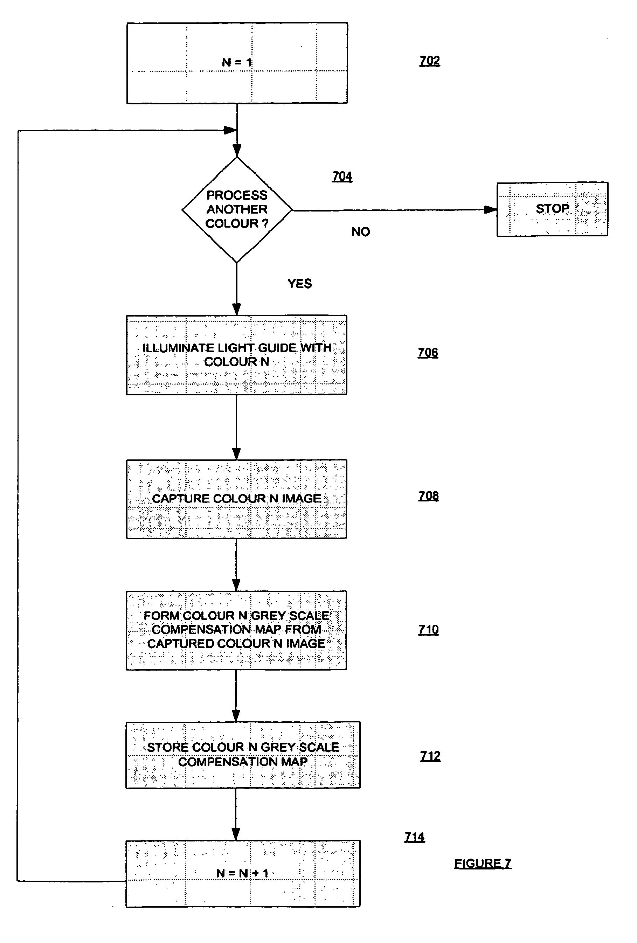

FIG. 7 illustrates another method for creating a hot spot filter. In FIG. 7, a colour grey scale compensation map is created for each colour of light illuminating the LCD. First, one of the colours is selected 702 in which light of that colour illuminates the light guide 706. The image from the light guide for that colour is captured 708. The captured image is processed to form a compensation map 710 to eliminate hot spots through use of the hot spot filter. The grey scale compensation map for the colour is stored in a suitable memory (e.g., the flash memory). The method determines if another colour of LED is to be processed 714, 704. In this way, distinct image patterns may be obtained for each colour of light generated by the light source.

The above-described embodiments of the present application are intended to be examples only. Those of skill in the art may effect alterations, modifications and variations to the particular embodiments without departing from the scope of the application. Instead of a liquid crystal display, a keypad or keyboard may be illuminated using the disclosed techniques. The invention described herein in the recited claims intends to cover and embrace all suitable changes in technology.

## Claims

1. A method of compensation for non-uniform illumination from a light guide (329) for a display(112) or keypad (114) for an electronic device (102, 202)
determining a light intensity distribution pattern having at least one hot spot across the light guide (328) when illuminated;
using the light intensity distribution pattern to create a bitmap correction filter for a first liquid crystal display (302, 306; 350); and applying said bitmap correction filter to pixels of the first liquid crystal display (302) to compensate for the hot spot in the light guide (328), such that a uniform light is provided for the display (112) or keypad (114).

2. The method of claim 1, wherein the display (112) is a liquid crystal display.

3. The method of any one of claims 1 to 2, wherein the grey scale compensation bitmap is stored in memory (224) of the electronic device (102, 202).

4. The method of any one of the preceding claims, wherein the grey scale compensation bitmap also compensates for different physical locations of different light sources (322, 324, 326) of a backlight of said electronic device (112, 202) for illuminating, said light guide (328).

5. A light output arrangement, comprising:
a light guide (328) having at least one hot spot across the light guide
a light source (322, 324, 326) for illuminating the light guide (328); and
a first liquid crystal display (302; 306; 350) comprising pixels, said display is suitably programmed to apply a bitmap correction filter to said pixels which compensates for said at least one hot spot across the light guide such that a uniform light output is produced.

6. The tight output arrangement of claim 5, wherein the first liquid crystal display (302, 306) is located in proximity to the tight guide (328) to provide a grey scale compensation bitmap of at least one darkened pixel.

7. The light output arrangement of any one of claim 5 or claim 6, wherein the first liquid crystal display is a field sequential liquid crystal display.

8. The light output arrangement of any one of claims 5 to 7, wherein the grey scale compensation bitmap also compensates for different physical locations of different light sources (324, 326, 328) of a backlight of said electronic device (102, 202) for illuminating said light guide (328).

9. The light output arrangement of any one of claims 5 to 8, wherein the arrangement comprises a keypad (114) that receives the compensated light output pattern from the light guide (328).

10. The light output arrangement of any one of claims 5 to 9, wherein the light guide (328) has a tapered block construction.

11. The light output arrangement of claim 10, wherein the light guide (328) has internal uneven areas to scatter light within the light guide.

12. A handheld wireless communications device (102, 202), wherein the device comprises the light output arrangement of any one of claims 5 to 11.

13. The handheld wireless communications device (102, 202) of claim 12, wherein the device is arranged to store the grey scale compensation bitmap in memory (224).

## Patentansprüche

1. Verfahren zum Kompensieren einer nicht-gleichmäßigen Illumination von einem Lichtleiter (328) für eine Anzeige (112) oder eine Tastatur (114) für eine elektronische Vorrichtung (102, 202), das aufweist:
Bestimmen eines Lichtintensitätsverteilungsmusters, das zumindest einen Hotspot über den Lichtleiter (328) hat, wenn illuminiert;
Verwenden des Lichtintensitätsverteilungsmusters, um einen Bitmap-Korrekturfilter zu erzeugen für eine erste Flüssigkristallanzeige (LCD - liquid crystal display) (302, 306; 350); und
Anwenden des Bitmap-Korrekturfilters auf Pixel der ersten Flüssigkristallanzeige (302), um den Hotspot in dem Lichtleiter (328) auszugleichen derart, dass ein gleichmäßiges Licht für die Anzeige (112) oder die Tastatur (114) vorgesehen ist.

2. Verfahren gemäß Anspruch 1, wobei die Anzeige (112) eine Flüssigkristallanzeige (LCD - liquid crystal display) ist.

3. Verfahren gemäß einem der Ansprüche 1 bis 2, wobei das Graustufen-Ausgleichsbitmap in einem Speicher (224) der elektronischen Vorrichtung (102, 202) gespeichert ist.

4. Verfahren gemäß einem der vorhergehenden Ansprüche, wobei das Graustufen-Ausgleichsbitmap auch verschiedene physikalische Positionen von verschiedenen Lichtquellen (322, 324, 326) einer Hintergrundbeleuchtung der elektronischen Vorrichtung (102, 202) zum Illuminieren des Lichtleiters (328) ausgleicht.

5. Lichtausgabeanordnung, die aufweist:
einen Lichtleiter (328), der zumindest einen Hotspot über den Lichtleiter hat;
eine Lichtquelle (322, 324, 326) zum Illuminieren des Lichtleiters (328);
und
eine erste Flüssigkristallanzeige (302, 306; 350), die Pixel aufweist, wobei die Anzeige geeignet programmiert ist zum Anwenden eines Bitmap-Korrekturfilters auf die Pixel, um den zumindest einen Hotspot über den Lichtleiter auszugleichen derart, dass eine gleichmäßige Lichtausgabe erzeugt wird.

6. Lichtausgabeanordnung gemäß Anspruch 5, wobei sich die erste Flüssigkristallanzeige (302, 306) in der Nähe des Lichtleiters (328) befindet, um ein Graustufen-Ausgleichsbitmap zumindest eines dunkleren Pixels vorzusehen.

7. Lichtausgabeanordnung gemäß einem von Anspruch 5 oder Anspruch 6, wobei die erste Flüssigkristallanzeige eine feldsequentielle Flüssigkristallanzeige ist.

8. Lichtausgabeanordnung gemäß einem der Ansprüche 5 bis 7, wobei das Graustufen-Ausgleichsbitmap auch verschiedene physikalische Positionen von verschiedenen Lichtquellen (322, 324, 326) einer Hintergrundbeleuchtung der elektronischen Vorrichtung (102, 202) zum Illuminieren des Lichtleiters (328) ausgleicht.

9. Lichtausgabeanordnung gemäß einem der Ansprüche 5 bis 8, wobei die Anordnung eine Tastatur (114) aufweist, die das ausgeglichene Lichtausgabemuster von dem Lichtleiter (328) empfängt.

10. Lichtausgabeanordnung gemäß einem der Ansprüche 5 bis 9, wobei der Lichtleiter (328) eine sich verjüngende Block-Konstruktion hat.

11. Lichtausgabeanordnung gemäß Anspruch 10, wobei der Lichtleiter (328) innere unebene Bereiche hat, um Licht in dem Lichtleiter zu streuen.

12. Handgehaltene drahtlose Kommunikationsvorrichtung (102, 202), wobei die Vorrichtung die Lichtausgabeanordnung gemäß einem der Ansprüche 5 bis 11 aufweist.

13. Handgehaltene drahtlose Kommunikationsvorrichtung (102, 202) gemäß Anspruch 12, wobei die Vorrichtung ausgebildet ist, das Graustufen-Ausgleichsbitmap in dem Speicher (224) zu speichern.

## Revendications

1. Procédé pour compenser l'éclairage non-uniforme provenant d'un guide de lumière (328) pour un dispositif d'affichage (112) ou un clavier (114) d'un dispositif électronique (102, 202), comprenant le fiait :
de déterminer un modèle de distribution de l'intensité lumineuse ayant au moins un point chaud à travers le guide de lumière (328) lorsqu'il est éclairé ;
d'utiliser le modèle de distribution de l'intensité lumineuse pour créer un filtre de correction de mode point pour un premier dispositif d'affichage à cristaux liquides (302, 306 ; 350) ; et
d'appliquer ledit filtre de correction de mode point aux pixels du premier dispositif d'affichage à cristaux liquides (302) pour compenser le point chaud dans le guide de lumière (328), de sorte qu'une lumière uniforme soit fournie pour le dispositif d'affichage (112) ou le clavier (114) .

2. Procédé de la revendication 1, dans lequel le dispositif d'affichage (112) est un dispositif d'affichage à cristaux liquides.

3. Procédé de l'une quelconque des revendications 1 et 2, dans lequel le mode point de compensation de l'échelle de gris est stocké dans la mémoire (224) du dispositif électronique (102, 202).

4. Procédé de l'une quelconque des revendications précédentes, dans lequel le mode point de compensation de l'échelle de gris compense également divers emplacements physiques de différentes sources de lumière (322, 324, 326) d'un rétroéclairage dudit dispositif électronique (102, 202) pour éclairer ledit guide de lumière (328).

5. Agencement de flux lumineux, comprenant :
un guide de lumière (328) ayant au moins un point chaud à travers le guide de lumière ;
une source de lumière (322, 324, 326) destinée à éclairer le guide de lumière (328) ; et
un premier dispositif d'affichage à cristaux liquides (302, 306 ; 350) comprenant des pixels, ledit dispositif d'affichage étant programmé de manière appropriée afin d'appliquer un filtre de correction de mode point auxdits pixels qui compense ledit au moins un point chaud à travers le guide de lumière de sorte qu'un flux lumineux uniforme soit produit.

6. Agencement de flux lumineux de la revendication 5, dans lequel le premier dispositif d'affichage à cristaux liquides (302, 306) est situé à proximité du guide de lumière (328) pour fournir un mode point de compensation de l'échelle de gris d'au moins un pixel sombre.

7. Agencement de flux lumineux de l'une quelconque des revendications 5 ou 6, dans lequel le premier dispositif d'affichage à cristaux liquides est un dispositif d'affichage à cristaux liquides à séquence de trames.

8. Agencement de flux lumineux de l'une quelconque des revendications 5 à 7, dans lequel le mode point de compensation de l'échelle de gris compense également des différents emplacements physiques de différentes sources de lumière (324, 326, 328) d'un rétroéclairage dudit dispositif électronique (102, 202) pour éclairer ledit guide de lumière (328).

9. Agencement de flux lumineux de l'une quelconque des revendications 5 à 8, dans lequel l'agencement comprend un clavier (114) qui reçoit le modèle de flux de lumière compensé à partir du guide de lumière (328).

10. Agencement de flux lumineux de l'une quelconque des revendications 5 à 9, dans lequel le guide de lumière (328) a une construction conique en blocs.

11. Agencement de flux lumineux de la revendication 10, dans lequel le guide de lumière (328) a des zones internes irrégulières pour diffuser la lumière dans le guide de lumière.

12. Dispositif (102, 202) de communications sans fil portatif, dans lequel le dispositif comprend l'agencement de flux lumineux de l'une quelconque des revendications 5 à 11.

13. Dispositif (102, 202) de communications sans fil portatif de la revendication 12, dans lequel le dispositif est agencé pour stocker le mode point de compensation de l'échelle de gris dans la mémoire (224).
